# EUROPEAN PATENT SPECIFICATION

(11) **EP 3 813 508 B1**
(45) Date of publication and mention of the grant of the patent: **20.11.2024**
(21) Application number: 19824552.4
(22) Date of filing: 19.06.2019
(51) Int. Cl.: A01D 101/00, A01G 20/43

(54) **POWERED LAWN DETHATCHER**
ANGETRIEBENER RASENVERTIKUTIERER
DÉCHAUMEUSE À GAZON MOTORISÉE

(30) Priority: 26.06.2018 HK 18108189
(43) Date of publication of application: 05.05.2021
(73) Proprietor: Techtronic Cordless GP, Anderson, SC 29621 (US)
(72) Inventor: LEE, Hei Man, Hong Kong (CN)
(74) Representative: Novagraaf Group
(86) International application number: PCT/CN2019/091885
(87) International publication number: WO 2020/001342

(56) References cited:
- EP-A2- 1 721 510
- CN-A- 106 416 595
- CN-A- 107 455 154
- CN-U- 204 244 710
- CN-U- 204 244 710
- CN-U- 204 811 004
- CN-U- 205 431 051
- DE-A1- 19 635 308
- DE-T5- 112016 002 687
- DE-U1- 9 211 347
- FR-A1- 2 987 716
- FR-B1- 2 881 917
- US-A1- 2006 277 714
- US-A1- 2008 105 445

## Description

### TECHNICAL FIELD

The invention relates to a powered lawn dethatcher, and particularly, although not exclusively, a battery powered lawn dethatcher.

### BACKGROUND

Lawn dethatching is an important but often overlooked lawn maintenance process. Generally, lawn dethatching involves removing, from a lawn, turf-grass tissue or layer ("thatch"), mostly formed by dead leaves, stems, and roots, and which has built-up to a certain thickness to block water, fertilizer, and pesticides from reaching soil, prevent sunlight from reaching deeper parts of the grass, etc. Timely removal of thatches is essential for improving lawn health and hence quality.

US6347593B discloses a lawn dethatcher. The dethatcher is operated with a small gasoline engine driving a motor and hence a dethatching mechanism for dethatching lawn. The use of gasoline or diesel makes the dethatcher rather expensive to fuel, and may cause pollution. Also, during operation the dethatching mechanism may agitate a large amount of dust and debris on the lawn. These dust and debris, if inhaled by the operator, may cause health related problems.

DE 11 2016 002687 T5 discloses a direct current dethatcher comprising a main housing used for accommodating a main body, a handle connected to the main housing for pushing the main body via external forces; and a wheel set comprising a rear wheel set and a front wheel set mounted at the bottom of the main housing. The main body comprises a dethatching mechanism, a power device supplying power to the dethatching mechanism, and a power control mechanism used for controlling the operation of the dethatching mechanism. The power device comprises a battery assembly and a DC electric motor. The battery assembly is electrically connected to the DC electric motor. Furthermore, the dethatcher comprises a garbage bucket, which is fixed to the rear end of main housing.

### SUMMARY OF THE INVENTION

Aspects of the invention provide a lawn dethatcher that overcomes or substantially ameliorates the above disadvantages or, more generally, to provide an improved lawn dethatcher.

In accordance with a first aspect of the invention, there is provided a powered lawn dethatcher, comprising: a dethatching mechanism for dethatching lawn; a driving mechanism for driving the dethatching mechanism, the driving mechanism comprises a motor operably connected with the dethatching mechanism; and a collection mechanism arranged to collect at least some dust and debris agitated by the dethatching mechanism during operation, the collecting mechanism comprises an inlet through which dust and debris may pass, an outlet through which air may pass, a motor-and-fan assembly for generating suction for collecting the dust and debris; and a collector arranged to store the dust and debris.

In one embodiment of the first aspect, the collection mechanism is arranged rearward of the dethatching mechanism, with respect to a forward traveling direction of the powered lawn dethatcher. In another embodiment of the first aspect, the collection mechanism is arranged forward of the dethatching mechanism, with respect to a forward traveling direction of the powered lawn dethatcher. In yet another embodiment of the first aspect, the powered lawn dethatcher includes two collection mechanism, one arranged rearward of the dethatching mechanism and one arranged forward of the dethatching mechanism.

Preferably, the motor of the motor and fan assembly is a brushless DC motor. Also, preferably, the inlet is arranged to at least partly face the lawn on which the powered lawn dethatcher is arranged. In one embodiment, the collector is removable for emptying the collected dust and debris. Alternatively, the collector may be non-removable but instead has an openable door for emptying the collected dust and debris.

The motor of the driving mechanism is preferably a brushless DC motor. A mechanical clutch or electrical clutch, actuable by the user, may be provided between the driving mechanism and the dethatching mechanism, to selectively operate the dethatching mechanism.

In one embodiment of the first aspect, the powered lawn dethatcher is arranged to be powered by a power source comprised of one or more battery packs. Preferably, the powered lawn dethatcher is arranged to be powered by a DC power source. In examples with multiple battery packs, the packs are preferably at least partly connected in parallel (i.e., at least two connected in parallel, electrically). The one or more battery pack preferably has a nominal voltage of 36V, 48V, or 58V.

The power source may be arranged to only power the driving mechanism. Alternatively, the power source may be further arranged to power the collection mechanism. A switching mechanism may be arranged to control whether the power source is to power the collection mechanism.

Preferably, the one or more battery packs are arranged to provide an operation voltage of about 48V. Optionally, the one or more battery packs are arranged to provide an operation voltage of up to about 80V. The powered lawn dethatcher may have an operation (output) power larger than 2kW, and more preferably, larger than 3kW.

Preferably, the operation power refers only to the power provided to operate the dethatching mechanism.

Preferably, the powered lawn dethatcher is a push-behind type lawn dethatcher.

In accordance with a second aspect of the invention, there is provided a battery-powered lawn dethatcher comprising: a dethatching mechanism for dethatching lawn; and a driving mechanism for driving the dethatching mechanism; wherein the driving mechanism is arranged to be powered by one or more battery packs, wherein the one or more battery packs are arranged to provide an operation voltage of about 48V and the powered lawn dethatcher has an operation power larger than 3kW. Preferably, the operation power refers only to the power provided to operate the dethatching mechanism.

Preferably, the battery-powered lawn dethatcher further includes the collection mechanism of the first aspect.

### BRIEF DESCRIPTION OF THE DRAWINGS

Embodiments of the invention will now be described, by way of example, with reference to the accompanying drawings in which:
Figure 1 is a schematic diagram of a powered lawn dethatcher in one embodiment of the invention;
Figure 2 is a schematic diagram of a powered lawn dethatcher in one embodiment of the invention;
Figure 3 is a schematic diagram of a powered lawn dethatcher in one embodiment of the invention;
Figure 4 is a schematic diagram of a powered lawn dethatcher in one embodiment of the invention;
Figures 5A is a picture of a dethatching mechanism operable in the powered lawn dethatcher of the invention; and
Figure 5B is a picture of another dethatching mechanism operable in the powered lawn dethatcher of the invention.

### DETAILED DESCRIPTION OF THE PREFERRED EMBODIMENT

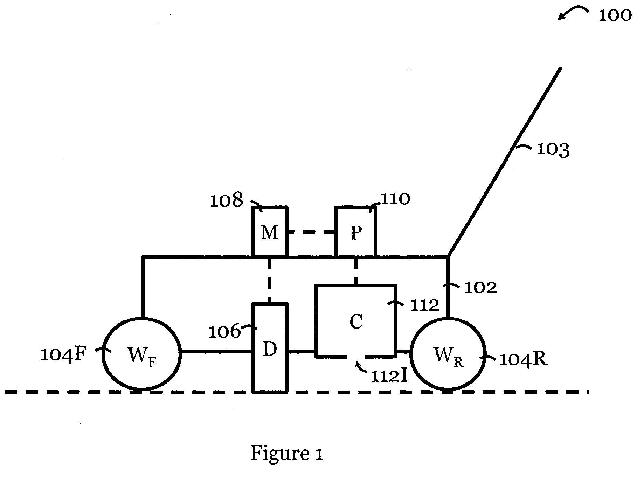

Figure 1 shows a powered lawn dethatcher 100, presented in schematic form, in one embodiment of the invention. The dethatcher 100 includes a chassis 102 and a handle 103 arranged at a rear end of the chassis 102 for allowing the user to push the dethatcher 100 from behind. A movement mechanism formed by front wheels 104F and rear wheels 104R is attached to the chassis 102. In this embodiment, the movement mechanism includes two front wheels 104F and two rear wheels 104R.

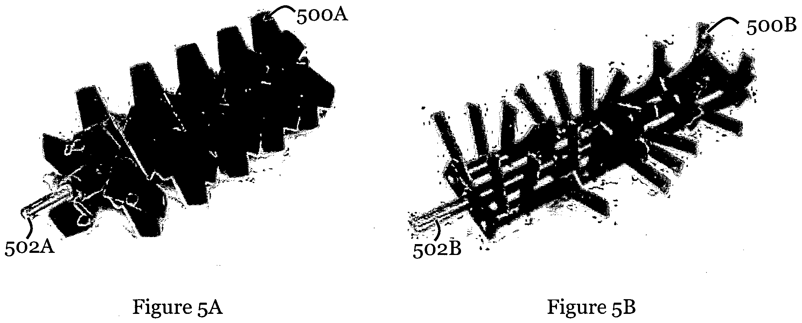

A dethatching mechanism 106 for dethatching lawn is arranged in the dethatcher 100. The dethatching mechanism 106 includes an axle (not shown) attached with multiple dethatching elements (not shown). The axle extends between two sides of the dethatcher 100 and is arranged to be driven into rotation by a driving mechanism 108. The dethatching elements attached to the axle are arranged to dethatch the lawn as the axle is rotated. The dethatching elements may be in the form of tines or blades, optionally spring biased, spaced apart along the long axis of the axle. For example, the dethatching elements 500B may be flail blades that are arranged to swing freely about the axle 502B (Figure 5B) or delta blades 500A fixedly mounted to the axle 502A at angled position and have beveled cutting edges (Figure 5A). The dethatching elements are arranged to penetrate the lawn to the thatch layer and lift it to the top of the lawn, predominantly by vertical movement of the elements.

The driving mechanism 108 for driving the dethatching mechanism 106 includes a motor operably connected with the dethatching mechanism 106. In this embodiment, the motor of the driving mechanism 108 is a brushless DC motor. A mechanical clutch or electrical clutch (not shown) may be provided between the driving mechanism 108 and the dethatching mechanism 106 to selectively disable operation of the dethatching mechanism 106. The clutch may be operable by a lever (not shown) arranged at the handle 103.

The power source 110 arranged to operate the driving mechanism 108, e.g., the motor, is preferably a DC power source. The power source 110 may be arranged to only operate the driving mechanism 108. In the present embodiment, the power source 110 is formed by a battery pack operable to provide an operation (nominal) voltage of about 48V. The battery pack, rechargeable, may be of Lithium-based chemistry, and are removable. The power source 110 enables the dethatcher 100 to have an operation power larger than 3kW.

The dethatcher 100 also includes a collection mechanism 112 arranged to collect at least some dust and debris agitated by the dethatching mechanism 106 during operation. The collection assembly 112 as shown in Figure 1 is arranged rearward of the dethatching mechanism 106, with respect to a forward traveling direction of the dethatcher 100. The collection assembly 112 includes an inlet 1121 through which dust and debris may pass and an outlet (not shown) through which air may pass. In this embodiment, the inlet 1121 is arranged to directly face the lawn on which the powered lawn dethatcher is arranged. The outlet is arranged to exhaust the air entered into the collection assembly 112. A motor-and-fan assembly (not shown) for generating suction for collecting the dust and debris, and a collector arranged to store the collected the dust and debris are also part of the collection assembly 112. In this embodiment, the motor of the motor and fan assembly is a brushless DC motor. The collector may include a filtering means of one or more filtering stages, and in the form of, e.g., bag, cyclone, mesh, operable to filter the dust and debris. The collector may be removable for emptying the collected dust and debris, or alternatively, the collector may be non-removable and has an openable door for emptying the collected dust and debris. In the present embodiment, the power source 110 is also arranged to power the motor of the collection mechanism 112. A switching mechanism (not shown) may be arranged in the dethatcher 100 to control the power connection between the power source 110 and the collection mechanism 112. The switching mechanism may be a switch arranged in the handle 103 or may be a foot-operated switch arranged on the chassis 104.

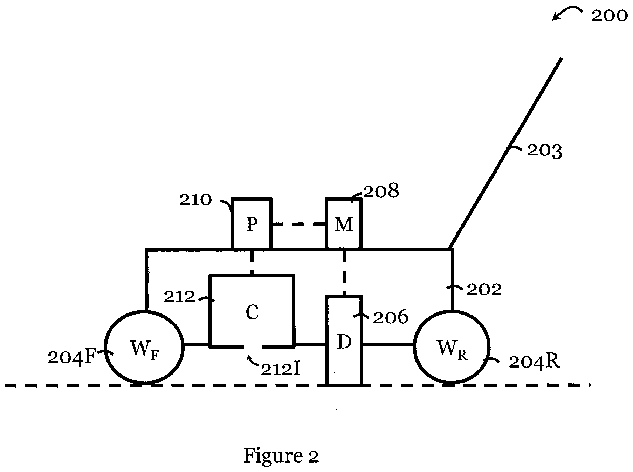

Figure 2 shows a powered lawn dethatcher 200, presented in schematic form, in one embodiment of the invention. The dethatcher 200 is largely the same as the dethatcher 100 and so the same reference numerals plus "100" is used to refer to like components. The only difference between the dethatcher 200 in Figure 2 and the dethatcher 100 in Figure 1 is that in Figure 2, the collection mechanism 212 is arranged forward of the dethatching mechanism 206 with respect to a forward traveling direction of the dethatcher 200.

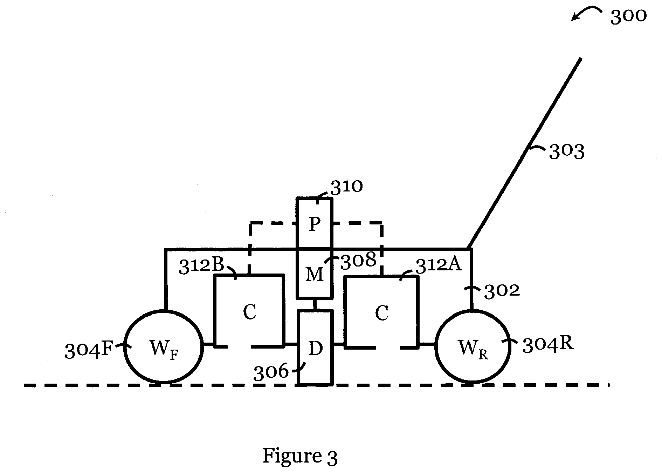

Figure 3 shows a powered lawn dethatcher 300, presented in schematic form, in one embodiment of the invention. The dethatcher 300 is largely the same as the dethatcher 100 and so the same reference numerals plus "200" is used to refer to like components. The only difference between the dethatcher 300 in Figure 3 and the dethatcher 100 in Figure 1 is that in Figure 3, the dethatcher 300 has two collection mechanisms 312A, 312B, one arranged rearward of the dethatching mechanism 306 and one arranged forward of the dethatching mechanism 306.

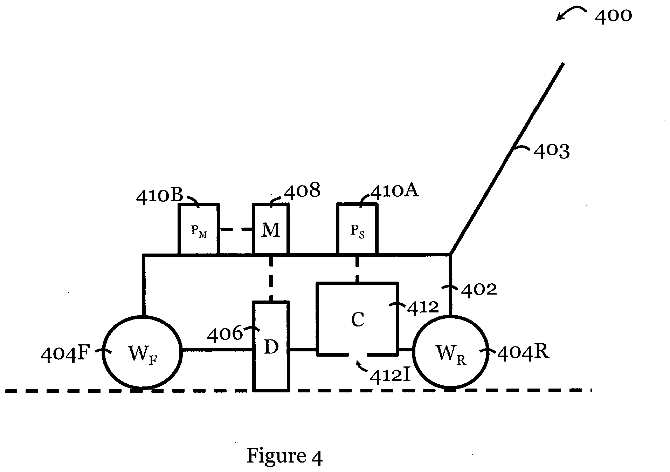

Figure 4 shows a powered lawn dethatcher 400, presented in schematic form, in one embodiment of the invention. The dethatcher 400 is largely the same as the dethatcher 100 and so the same reference numerals plus "300" is used to refer to like components. The only difference between the dethatcher 400 in Figure 4 and the dethatcher 100 in Figure 1 is that in Figure 4, the dethatcher 300 has separate power sources 410A, 410B for respectively powering the collection mechanism 412 and the dethatching mechanism 406.

The dethatcher 100, 200, 300, 400 of the above embodiments are advantageous in that it is battery powered, and so is cheaper to operate than conventional engine-operated units. The dethatcher 100, 200, 300, 400 is not only battery powered, but is also provided with a collection assembly which can be used to collection dust and debris as the dethatcher operates, thereby providing an environmental friendly machine that is safe to use (pose less health concerns to the operator).

It will be appreciated by persons skilled in the art that numerous variations and/or modifications may be made to the invention as shown in the specific embodiments without departing from the scope of the invention as defined by the claims. The features of the dethatcher 100, 200, 300, 400 may be combined in any way to provide new embodiments. For example, the separate power source aspect provided by Figure 4 can be applied to the embodiment of Figure 3 to provide 3 separate power sources for respectively operating the driving mechanism and the two collection mechanisms. For example, the dethatcher in the invention may take any form, and optionally with additional structures or functional modules as illustrated in the above embodiments. The movement mechanism may be formed by any number of wheels, any types of wheels (e.g., castor, rollers), and may be operably connected with driving motor to provide movement assist. The dethatching mechanism may be removable. The driving mechanism need not be provided on top of the chassis, but may be inside the chassis. Likewise, the power source may be arranged in a receptacle provided by the chassis. The power source may be formed by any number of battery packs and may be of different nominal voltages, such as 36V, 48V, 58V. The power source are preferably includes at least 2 battery packs connected in parallel (electrically). The inlet of the collection mechanism may only at least partly face the lawn surface.

The present embodiments are, therefore, to be considered in all respects as illustrative and not restrictive.

## Claims

1. A powered lawn dethatcher (100, 200, 300, 400), comprising:
a dethatching mechanism (106, 206, 306, 406) adapted to dethatch lawn;
a driving mechanism (108, 208, 308, 408) adapted to drive the dethatching mechanism (106, 206, 306, 406), the driving mechanism (108, 208, 308, 408) comprises a motor operably connected with the dethatching mechanism; and
a collection mechanism (112, 212, 312A, 312B, 412) arranged to collect at least some dust and debris agitated by the dethatching mechanism (106, 206, 306, 406) during operation, **characterized in that**
the collection mechanism (112, 212, 312A, 312B, 412) comprises:
an inlet (1121, 2121, 4121) through which dust and debris may pass;
an outlet through which air may pass;
a motor-and-fan assembly for generating suction for collecting the dust and debris; and
a collector arranged to store the collected the dust and debris.

2. The powered lawn dethatcher (100, 200, 300, 400) of claim 1, wherein the collection mechanism (112, 212, 312A, 312B, 412) is arranged rearward of the dethatching mechanism (106, 206, 306, 406), with respect to a forward traveling direction of the powered lawn dethatcher (100, 200, 300, 400).

3. The powered lawn dethatcher (100, 200, 300, 400) of claim 1, wherein the collection mechanism (112, 212, 312A, 312B, 412) is arranged forward of the dethatching mechanism (106, 206, 306, 406), with respect to a forward traveling direction of the powered lawn dethatcher (100, 200, 300, 400).

4. The powered lawn dethatcher (100, 200, 300, 400) of claim 1, wherein the motor of the motor and fan assembly is a brushless DC motor.

5. The powered lawn dethatcher (100, 200, 300, 400) of any of claims 1 to 4 wherein the inlet (1121, 2121, 4121) is arranged to at least partly face the lawn on which the powered lawn dethatcher (100, 200, 300, 400) is arranged.

6. The powered lawn dethatcher (100, 200, 300, 400) of any one of claims 1 to 5, wherein the collector is removable for emptying the collected dust and debris.

7. The powered lawn dethatcher (100, 200, 300, 400) of claim 6, wherein the motor of the driving mechanism (108, 208, 308, 408) is a brushless DC motor.

8. The powered lawn dethatcher (100, 200, 300, 400) of any one of claims 1 to 7, wherein the powered lawn dethatcher (100, 200, 300, 400) is arranged to be powered by a power source (110, 210, 310, 410A, 410B) comprised of one or more battery packs.

9. The powered lawn dethatcher (100, 200, 300, 400) of claim 8, wherein the power source (110, 210, 310, 410A, 410B) is arranged to power the driving mechanism (108, 208, 308, 408).

10. The powered lawn dethatcher (100, 200, 300, 400) of claim 9, wherein the power source (110, 210, 310, 410A) is further arranged to power the collection mechanism (112, 212, 312A, 312B, 412).

11. The powered lawn dethatcher (100, 200, 300, 400) of any one of claims 8 to 10, wherein the one or more battery packs are arranged to provide the powered lawn dethatcher (100, 200, 300, 400) with an operation power larger than 3kW.

12. The powered lawn dethatcher (100, 200, 300, 400) of any one of claims 8 to 10, wherein the one or more battery packs includes at least two battery packs connected in parallel to provide the powered lawn dethatcher (100, 200, 300, 400) with an operation power of at least 2kW.

## Patentansprüche

1. Angetriebener Rasenvertikutierer (100, 200, 300, 400), umfassend:
einen Vertikutiermechanismus (106, 206, 306, 406), der zum Vertikutieren von Rasen geeignet ist;
einen Antriebsmechanismus (108, 208, 308, 408), der zum Antreiben des Vertikutiermechanismus (106, 206, 306, 406) geeignet ist, wobei der Antriebsmechanismus (108, 208, 308, 408) einen Motor umfasst, der mit dem Vertikutiermechanismus wirkverbunden ist; und
einen Auffangmechanismus (112, 212, 312A, 312B, 412), der angeordnet ist, um mindestens etwas Staub und Schmutz aufzufangen, der durch den Vertikutiermechanismus (106, 206, 306, 406) während des Betriebs aufgewühlt wird, **dadurch gekennzeichnet, dass**
der Auffangmechanismus (112, 212, 312A, 312B, 412) umfasst:
einen Einlass (1121, 2121, 4121), durch den Staub und Schmutz gelangen können;
ein Auslass, durch den Luft strömen kann;
eine Motor- und Lüfterbaugruppe zum Erzeugen einer Saugkraft zum Auffangen von Staub und Schmutz; und
ein Auffangbehälter zum Aufbewahren des aufgefangenen Staubs und Schmutzes.

2. Angetriebener Rasenvertikutierer (100, 200, 300, 400) nach Anspruch 1, wobei der Auffangmechanismus (112, 212, 312A, 312B, 412) rückwärtig von dem Vertikutiermechanismus (106, 206, 306, 406) in Bezug auf eine Vorwärtsfahrtrichtung des angetriebenen Rasenvertikutierers (100, 200, 300, 400) angeordnet ist.

3. Angetriebener Rasenvertikutierer (100, 200, 300, 400) nach Anspruch 1, wobei der Auffangmechanismus (112, 212, 312A, 312B, 412) nach vorne gerichtet von dem Vertikutiermechanismus (106, 206, 306, 406) in Bezug auf eine Vorwärtsfahrtrichtung des angetriebenen Rasenvertikutierers (100, 200, 300, 400) angeordnet ist.

4. Angetriebener Rasenvertikutierer (100, 200, 300, 400) nach Anspruch 1, wobei der Motor der Motor- und Lüfterbaugruppe ein bürstenloser Gleichstrommotor ist.

5. Angetriebener Rasenvertikutierer (100, 200, 300, 400) nach einem der Ansprüche 1 bis 4, wobei der Einlass (1121, 2121, 4121) angeordnet ist, um mindestens teilweise dem Rasen zugewandt zu sein, auf dem der angetriebene Rasenvertikutierer (100, 200, 300, 400) angeordnet ist.

6. Angetriebener Rasenvertikutierer (100, 200, 300, 400) nach einem der Ansprüche 1 bis 5, wobei der Auffangbehälter zum Entleeren des aufgefangenen Staubs und Schmutzes abnehmbar ist.

7. Angetriebener Rasenvertikutierer (100, 200, 300, 400) nach Anspruch 6, wobei der Motor des Antriebsmechanismus (108, 208, 308, 408) ein bürstenloser Gleichstrommotor ist.

8. Angetriebener Rasenvertikutierer (100, 200, 300, 400) nach einem der Ansprüche 1 bis 7, wobei der angetriebene Rasenvertikutierer (100, 200, 300, 400) angeordnet ist, um von einer Leistungsquelle (110, 210, 310, 410A, 410B) angetrieben zu werden, die aus einem oder mehreren Batteriepacks besteht.

9. Angetriebener Rasenvertikutierer (100, 200, 300, 400) nach Anspruch 8, wobei die Leistungsquelle (110, 210, 310, 410A, 410B) angeordnet ist, um den Antriebsmechanismus (108, 208, 308, 408) mit Leistung zu versorgen.

10. Angetriebener Rasenvertikutierer (100, 200, 300, 400) nach Anspruch 9, wobei die Leistungsquelle (110, 210, 310, 410A)ferner angeordnet ist, um den Auffangmechanismus (112, 212, 312A, 312B, 412) mit Leistung zu versorgen.

11. Angetriebener Rasenvertikutierer (100, 200, 300, 400) nach einem der Ansprüche 8 bis 10, wobei das eine oder die mehreren Batteriepacks angeordnet sind, um dem angetriebenen Rasenvertikutierer (100, 200, 300, 400) eine Betriebsleistung von mehr als 3 kW bereitzustellen.

12. Angetriebener Rasenvertikutierer (100, 200, 300, 400) nach einem der Ansprüche 8 bis 10, wobei das eine oder die mehreren Batteriepacks mindestens zwei parallel geschaltete Batteriepacks einschließen, um dem angetriebenen Rasenvertikutierer (100, 200, 300, 400) eine Betriebsleistung von mindestens 2 kW bereitzustellen.

## Revendications

1. Déchaumeuse à gazon alimentée en puissance (100, 200, 300, 400), comprenant :
un mécanisme de déchaumage (106, 206, 306, 406) conçu pour déchaumer du gazon ;
un mécanisme d'entraînement (108, 208, 308, 408) conçu pour entraîner le mécanisme de déchaumage (106, 206, 306, 406), le mécanisme d'entraînement (108, 208, 308, 408) comprend un moteur relié de manière fonctionnelle au mécanisme de déchaumage ; et
un mécanisme de collecte (112, 212, 312A, 312B, 412) agencé pour collecter au moins une partie de la poussière et des débris agités par le mécanisme de déchaumage (106, 206, 306, 406) pendant le fonctionnement, **caractérisé en ce que**
le mécanisme de collecte (112, 212, 312A, 312B, 412) comprend :
une entrée (1121, 2121, 412I) à travers laquelle de la poussière et des débris peuvent passer ;
une sortie à travers laquelle de l'air peut passer ;
un ensemble moteur et ventilateur permettant de générer une aspiration permettant de collecter la poussière et les débris ; et
un collecteur agencé pour stocker la poussière et les débris collectés.

2. Déchaumeuse à gazon alimentée en puissance (100, 200, 300, 400) selon la revendication 1, dans laquelle le mécanisme de collecte (112, 212, 312A, 312B, 412) est agencé à l'arrière du mécanisme de déchaumage (106, 206, 306, 406), par rapport à une direction de déplacement vers l'avant de la déchaumeuse à gazon alimentée en puissance (100, 200, 300, 400).

3. Déchaumeuse à gazon alimentée en puissance (100, 200, 300, 400) selon la revendication 1, dans laquelle le mécanisme de collecte (112, 212, 312A, 312B, 412) est agencé à l'avant du mécanisme de déchaumage (106, 206, 306, 406), par rapport à une direction de déplacement vers l'avant de la déchaumeuse à gazon alimentée en puissance (100, 200, 300, 400).

4. Déchaumeuse à gazon alimentée en puissance (100, 200, 300, 400) selon la revendication 1, dans laquelle le moteur de l'ensemble moteur et ventilateur est un moteur à courant continu sans balai.

5. Déchaumeuse à gazon alimentée en puissance (100, 200, 300, 400) selon l'une quelconque des revendications 1 à 4 dans laquelle l'entrée (1121, 2121, 412I) est agencée pour faire face au moins vers le gazon sur lequel la déchaumeuse à gazon alimentée en puissance (100, 200, 300, 400) est agencée.

6. Déchaumeuse à gazon alimentée en puissance (100, 200, 300, 400) selon l'une quelconque des revendications 1 à 5, dans laquelle le collecteur peut être retiré pour vider la poussière et les débris collectés.

7. Déchaumeuse à gazon alimentée en puissance (100, 200, 300, 400) selon la revendication 6, dans laquelle le moteur du mécanisme d'entraînement (108, 208, 308, 408) est un moteur à courant continu sans balai.

8. Déchaumeuse à gazon alimentée en puissance (100, 200, 300, 400) selon l'une quelconque des revendications 1 à 7, dans laquelle la déchaumeuse à gazon alimentée en puissance (100, 200, 300, 400) est agencée pour être alimentée en puissance par une source de puissance (110, 210, 310, 410A, 410B) constituée d'un ou plusieurs blocs-batteries.

9. Déchaumeuse à gazon alimentée en puissance (100, 200, 300, 400) selon la revendication 8, dans laquelle la source de puissance (110, 210, 310, 410A, 410B) est agencée pour alimenter en puissance le mécanisme d'entraînement (108, 208, 308, 408).

10. Déchaumeuse à gazon alimentée en puissance (100, 200, 300, 400) selon la revendication 9, dans laquelle la source de puissance (110, 210, 310,410A) est agencée en outre pour alimenter en puissance le mécanisme de collecte (112, 212, 312A, 312B, 412).

11. Déchaumeuse à gazon alimentée en puissance (100, 200, 300, 400) selon l'une quelconque des revendications 8 à 10, dans laquelle le ou les blocs-batteries sont agencés pour fournir à la déchaumeuse à gazon alimentée en puissance (100, 200, 300, 400) une puissance de fonctionnement supérieure à 3 kW.

12. Déchaumeuse à gazon alimentée en puissance (100, 200, 300, 400) selon l'une quelconque des revendications 8 à 10, dans laquelle le ou les blocs-batteries comportent au moins deux blocs-batteries connectés en parallèle pour fournir à la déchaumeuse à gazon alimentée en puissance (100, 200, 300, 400) une puissance de fonctionnement d'au moins 2 kW.
